# EUROPÄISCHE PATENTSCHRIFT

(11) **EP 0 538 602 B1**
(45) Veröffentlichungstag und Bekanntmachung des Hinweises auf die Patenterteilung: **12.03.1997**
(21) Anmeldenummer: 92115148.6
(22) Anmeldetag: 04.09.1992
(51) Int. Cl.: B01D 46/52

(54) **Filter mit einer Filterkassette, Verfahren zur Herstellung einer solchen Filterkassette und Filterkassette für ein solches Filter**
Filter with a filter cassette, process for constructing such a filter cassette and filter cassette for such a filter
Filtre avec cassette filtrante, procédé pour la construction de la cassette filtrante et cassette filtrante pour un tel filtre

(30) Priorität: 07.10.1991 DE 4133175
(43) Veröffentlichungstag der Anmeldung: 28.04.1993
(73) Patentinhaber: THERMOPLAST-TECHNIK GESELLSCHAFT FÜR KUNSTSTOFFVERARBEITUNG m.b.H., D-36124 Eichenzell (DE)
(72) Erfinder: Müller, Theodor, W-6405 Eichenzell (DE); Hartung, Peter, W-6405 Eichenzell-Rothemann (DE)
(74) Vertreter: Schlagwein, Udo, Dipl.-Ing.

(56) Entgegenhaltungen:
- EP-A- 0 170 643
- WO-A-91/19898
- DE-A- 3 936 858
- FR-A- 2 170 744
- GB-A- 1 121 896

## Beschreibung

Die Erfindung betrifft ein Filter mit einer in einem Filtergehäuse angeordneten Filterkassette, welche ein zickzackförmig gefaltetes, sich in einer Ebene erstreckendes Filtermedium mit gegen die beiden zickzackförmig verlaufenden Seitenflächen geklebten, dünnwandigen Randstreifen aufweist. Weiterhin betrifft die Erfindung ein Verfahren zur Herstellung eines solchen Filters und eine Filterkassette für den Filter.

Ein Filter der vorstehenden Art ist Gegenstand der DE-A-31 50 392. Bei dem bekannten Filter haben die auf das Filtermedium aufgeklebten Randstreifen gemäß einer Ausführungsform einen umlaufenden, flanschartig nach außen gerichteten Rand und sind rahmenartig gegen alle vier Schmalseiten des Filtermediums geklebt. Das mit diesen Randstreifen versehene Filtermedium bildet eine Filterkassette, welche im montierten Zustand mit dem flanschartigen Rand axial gegen eine Dichtung eines Aufnahmerahmens anliegt. Die DE-A-31 50 392 zeigt auch schon eine Filterkassette, bei der das zickzackförmig gefaltete Filtermedium durch eine nicht überstehende Bandage zusammengehalten und in einen festen Rahmen eingesetzt ist, wo es mit Haftmittel in Vlieswatte oder Schaumstoff abdichtend befestigt wird.

Die Randstreifen stellen bei dem bekannten Filter einen festen Rahmen dar. Sie müssen deshalb so stabil ausgeführt sein, daß sie das Filtermedium zu tragen vermögen, wenn ihr nach außen gerichteter, flanschartige Rand in einen Aufnahmerahmen eingespannt ist. Dadurch können sie nicht aus demselben Material gefertigt sein wie das Filtermedium. Der durch die Randstreifen gebildete Rahmen muß bei einem Austausch des Filtermediums mit entsorgt werden. Ein weiterer Nachteil der bekannten Filterkassette liegt darin, daß ihre Montage in einen Aufnahmerahmen und das Aufkleben der Randstreifen gegen die vier Schmalseiten des Filtermediums relativ zeitaufwendig ist. Auch bei der Ausführungsform nach Figur 6 der DE-A-31 50 392 bildet der stabile Rahmen mit dem Filtermedium eine untrennbare Einheit, was zu Entsorgungsproblemen führt.

Durch die EP-A-0 170 643 ist es auch schon bekannt, ein zickzackförmig gefaltetes Filtermedium dadurch in einem aus zwei Rahmenteilen gebildeten, festen Rahmen zu halten, daß die Ränder dieses Filtermediums zwischen den Rahmenteilen eingeklemmt werden.

Der Erfindung liegt das Problem zugrunde, einen Filter zu entwickeln, der möglichst kostengünstig herstellbar ist und zu einem geringen Entsorgungsaufwand beim Auswechseln seines Filtermediums führt. Weiterhin sollen ein möglichst kostengünstig durchführbares Verfahren zur Herstellung einer Filterkassette für einen solchen Filter und eine Filterkassette für den Filter geschaffen werden.

Das erstgenannte Problem wird erfindungsgemäß dadurch gelöst, daß zum Halten der Filterkassette in dem Filtergehäuse ein über den Rand der Filterkassette greifender Spannrahmen vorgesehen ist, welcher die Randstreifen jeweils mit einer überstehenden, reinluftseitigen Stirnfläche in eine Dichtung des Filtergehäuses drückt und an zwei gegenüberliegenden Seiten jeweils einen in die äußerste zickzackförmige Faltung des Filtermediums eingreifenden und diese in eine weitere Dichtung des Filtergehäuses drückenden Flächenzinken aufweist.

Ein solcher Filter ist sehr kostengünstig herzustellen und führt zu einem geringen Entsorgungsaufwand beim Auswechseln seines Filtermediums. Das Auswechseln kann sehr rasch und einfach erfolgen. Durch die zwei zur Dichtung hin überstehenden Randstreifen und die beiden Flächenzinken ist die Abdichtung des Filtermediums im Filtergehäuse mit geringstmöglichem Aufwand verwirklicht.

Das zweitgenannte Problem wird erfindungsgemäß dadurch gelöst, daß mittels einer Kantenleimmaschine ein dünnwandiger, vom anderen Randstreifen separater Randstreifen gegen die überstehende zickzackförmige Seitenfläche geklebt wird.

Durch diese Verfahrensweise können für die Herstellung von Filterkassetten in der Möbelindustrie allgemein gebräuchliche Kantenleimmaschinen verwendet werden. Da das Filtermedium in einem Aufnahmekamm gehalten ist, kann man es mit diesem Aufnahmekamm in eine Kantenleimmaschine einbringen und dort einen Randstreifen auf genau die gleiche Weise anleimen, wie man sonst auf der Maschine ein Furnier oder einen Randstab gegen eine Kante einer Spanplatte anleimt. Das erfindungsgemäße Verfahren ist deshalb sehr kostengünstig mit in der Möbelindustrie vorhandenen Maschinen durchzuführen.

Ein weiterer Vorteil liegt darin, daß der Randstreifen massearm ist, so daß beim Austausch einer Filterkassette kein aufwendiger Rahmen zusammen mit dem Filtermedium entsorgt werden muß.

Man könnte das Filtermedium zunächst nach einer Seite hin im Aufnahmekamm vorspringen lassen, dann dort den einen Randstreifen ankleben und anschließend das Filtermedium im Aufnahmekamm zur anderen Seite hin verschieben, so daß dann der zweite Randstreifen angeklebt werden kann. Die Herstellung einer Filterkassette ist jedoch kostengünstiger, wenn gemäß einer vorteilhaften Weiterbildung des erfindungsgemäßen Verfahrens ein Aufnahmekamm verwendet wird, der geringfügig schmaler ist als das Filtermedium, so daß das Filtermedium im Aufnahmekamm nach beiden Seiten hin geringfügig übersteht.

Ein Wegbiegen und Verformen des Filtermediums beim Anleimen der Seitenstreifen kann besonders zuverlässig ausgeschlossen werden, wenn in den Aufnahmekamm nach dem Einsetzen des Filtermediums ein zweiter Aufnahmekamm eingeschoben wird. Diese Verfahrenstechnik, verbunden mit einer in der Möbelindustrie gebräuchlichen Kantenleimmaschine, erlaubt die Herstellung von rechteckigen, sich in einer Ebene erstreckende Filterkassetten mit unterschiedlichen Längen, Breiten und Höhen auf einer Maschine mit geringfügigem Verstellaufwand.

Das zuletzt genannte Problem, nämlich die Schaffung einer Filterkassette für den erfindungsgemäßen Filter, welche ein zickzackförmig gefaltetes, sich in einer Ebene erstreckendes Filtermedium und Randstreifen zum Halten des Filtermediums aufweist, und bei der die Randstreifen gegen die beiden zickzackförmig verlaufenden Seitenflächen geklebt sind, wird erfindungsgemäß dadurch gelöst, daß die Randstreifen auf der Reinluftseite des Filtermediums geringfügig über das zickzackförmig verlaufende Filtermedium ragen.

Eine solche Filterkassette ist besonders kostengünstig herzustellen und bedingt einen geringen Entsorgungsaufwand, weil sie zusätzlich zum Filtermedium nur die dünnwandigen Randstreifen hat. Diese können den gleichen Kunststoff aufweisen wie das Filtermedium, so daß man es bei der Entsorgung nicht mit verschiedenen Werkstoffen zu tun hat. Zugleich erfolgt bei einer solchen Filterkassette die Abdichtung im Filtergehäuse auf besonders einfache Weise.

Die Erfindung läßt zahlreiche Ausführungsmöglichkeiten zu. Zur weiteren Verdeutlichung ihres Grundprinzips wird nachfolgend auf die Zeichnung Bezug genommen. Diese zeigt in
- Fig.1: eine perspektivische Ansicht eines Randbereiches eines Filtermediums der erfindungsgemäßen Filterkassette,
- Fig.2: einen Randstreifen der Filterkassette,
- Fig.3: einen bei der Herstellung der Filterkassette zu verwendenden Aufnahmekamm,
- Fig.4: einen Querschnitt durch ein Filter nach der Erfindung,
- Fig.5: einen Längsschnitt durch einen Randbereich des Filters.

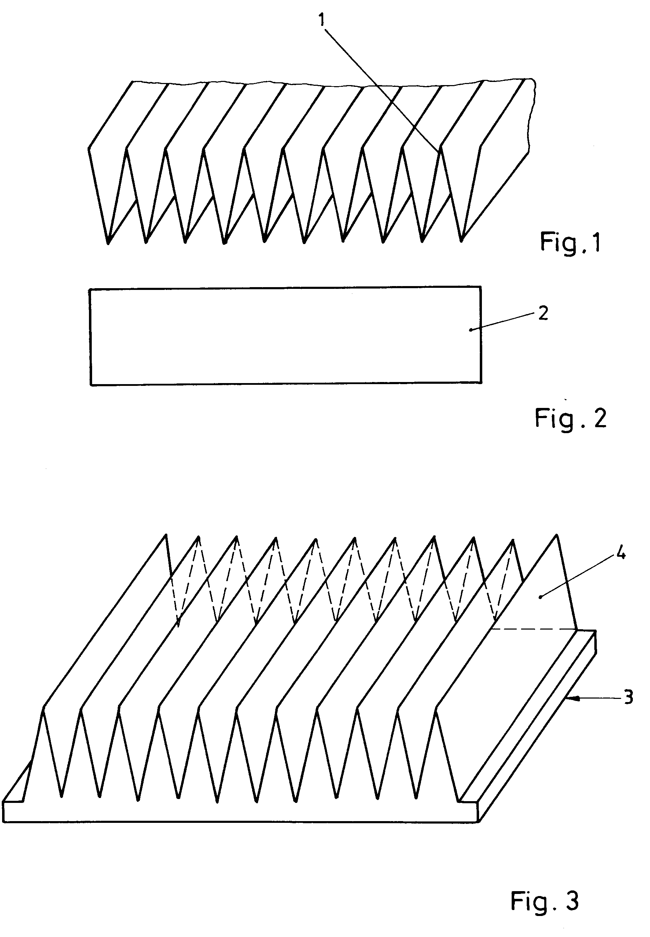

Die Figur 1 zeigt einen Randbereich eines Filtermediums 1, welches durch zickzackförmiges Falten einer ebenen Materialbahn erzeugt wurde und aus einem nicht zur Bildung von Bakterienherden neigenden, elektrostatisch aufgeladenen Kunststoff besteht.

In Figur 2 ist ein Randstreifen 2 aus einem dünnwandigen Material dargestellt. Solche Randstreifen 2 werden erfindungsgemäß gegen jede zickzackförmig verlaufende Seite des Filtermediums 1 mittels einer Kantenleimmaschine geklebt. Hierzu wird das zickzackförmig gefaltete Filtermedium von oben her in einen in Figur 3 dargestellten Aufnahmekamm 3 derart eingeschoben, daß der Aufnahmekamm 3 mit Flächenzinken 4 in die Faltungen des Filtermediums 1 greift. Zur weiteren Stabilisierung kann anschließend von oben her ein entsprechend gestalteter Aufnahmekamm in das Filtermedium 1 eingesetzt werden.

Wichtig ist, daß die Aufnahmekämme 3 geringfügig schmaler sind als das Filtermedium 1, so daß dieses nach beiden Seiten hin geringfügig übersteht. Dadurch kann man die Randstreifen 2 auf einer in der Möbelindustrie üblichen Kantenleimmaschine gegen die zickzackförmigen Stirnflächen des Filtermediums kleben.

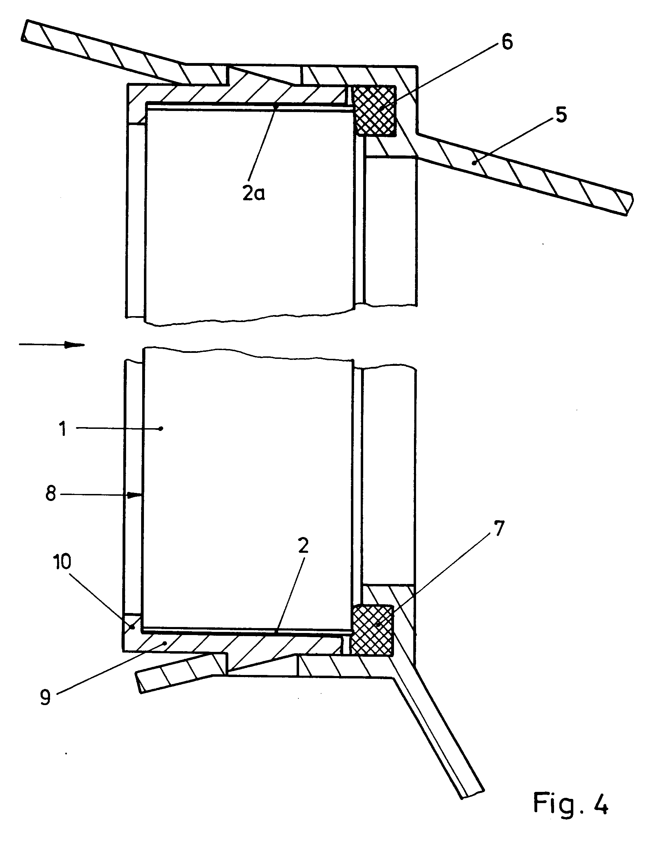

Die Figur 4 zeigt teilweise ein Filtergehäuse 5 mit zwei durch einen Polyurethanschaum gebildete, in Längsrichtung verlaufende Dichtungen 6, 7. Weiterhin ist eine in das Filtergehäuse 5 eingesetzte Filterkassette 8 gezeigt, welche aus dem in Figur 1 gezeigten Filtermedium 1 und den Randstreifen 2, 2a besteht. Zu erkennen ist, daß die Randstreifen 2, 2a auf der Reinluftseite des Filters geringfügig über das Filtermedium 1 hinausragen und sich deshalb in die Dichtungen 6, 7 zu drücken vermögen. Die zur Abdichtung erforderliche Andrückkraft wird von einem Spannrahmen 9 erzeugt, welcher mit dem Gehäuse 5 verrastet ist und der mit einem Steg 10 auf der Filterkassette 8 aufsitzt.

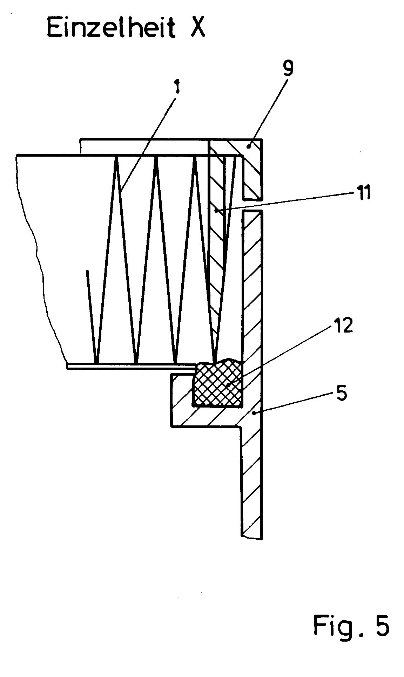

Die Figur 5 zeigt im Schnitt den Randbereich des Filtergehäuses 5 an einem in Haupterstreckungsrichtung des Filtermediums 1 liegenden Gehäuseende. Zu sehen ist, daß der Spannrahmen 9 dort einen Flächenzinken 11 hat, welcher in die äußerste Faltung des Filtermediums 1 eingreift und dort das Filtermedium 1 in eine gehäusefeste Dichtung 12 drückt, welche genau wie die Dichtungen 6 und 7 aus Polyurethanschaum besteht. Auch auf der der Darstellung in Figur 5 gegenüberliegenden Seite ist das Filtermedium 1 mittels eines dem Flächenzinken 11 entsprechenden Flächenzinkens gegen eine der Dichtung 12 entsprechende Dichtung gehalten.

## Patentansprüche

1. Filter mit einer in einem Filtergehäuse (5) angeordneten Filterkassette (8), welche ein zickzackförmig gefaltetes, sich in einer Ebene erstreckendes Filtermedium (1) mit gegen die beiden zickzackförmig verlaufenden Seitenflächen geklebten, dünnwandigen Randstreifen (2) aufweist, **dadurch gekennzeichnet**, daß zum Halten der Filterkassette in dem Filtergehäuse (5) ein über den Rand der Filterkassette (8) greifender Spannrahmen (9) vorgesehen ist, welcher die Randstreifen (2) jeweils mit einer überstehenden, reinluftseitigen Stirnfläche in eine Dichtung (6, 7) des Filtergehäuses (5) drückt und an zwei gegenüberliegenden Seiten jeweils einen in die äußerste zickzackförmige Faltung des Filtermediums (1) eingreifenden und diese in eine weitere Dichtung des Filtergehäuses (5) drückenden Flächenzinken (11) aufweist.

2. Verfahren zur Herstellung einer ein zickzackförmig gefaltetes, sich in einer Ebene erstreckendes Filtermedium und zwei Randstreifen zum Halten des Filtermediums aufweisenden Filterkassette, bei dem das Filtermedium zum Aufbringen jedes Randstreifens in einen Aufnahmekamm derart eingesetzt wird, daß es an der jeweiligen Seite des Aufnahmekammes mit seiner zickzackförmig verlaufenden Seitenfläche geringfügig übersteht, für ein Filter nach Anspruch 1, **dadurch gekennzeichnet**, daß mittels einer Kantenleimmaschine ein dünnwandiger, vom anderen Randstreifen separater Randstreifen gegen die überstehende zickzackförmige Seitenfläche geklebt wird.

3. Verfahren nach Anspruch 2, **dadurch gekennzeichnet**, daß ein Aufnahmekamm verwendet wird, der geringfügig schmaler ist als das Filtermedium, so daß das Filtermedium im Aufnahmekamm nach beiden Seiten hin geringfügig übersteht.

4. Verfahren nach den Ansprüchen 2 und 3, **dadurch gekennzeichnet**, daß in den Aufnahmekamm nach dem Einsetzen des Filtermediums ein zweiter Aufnahmekamm eingeschoben wird.

5. Filterkassette für einen Filter nach Anspruch 1, welche ein zickzackförmig gefaltetes, sich in einer Ebene erstreckendes Filtermedium und Randstreifen zum Halten des Filtermediums aufweist und bei der die Randstreifen (2, 2a) gegen die beiden zickzackförmig verlaufenden Seitenflächen geklebt sind **dadurch gekennzeichnet**, daß die Randstreifen (2, 2a) auf der Reinluftseite des Filtermediums (1) geringfügig über das zickzackförmig verlaufende Filtermedium (1) ragen.

## Claims

1. Filter with a filter cartridge (8) arranged in a filter housing (5) and having a filter medium (1) which is folded in a zigzag manner, extends in a plane and comprises thin-walled border strips (2) stuck to the two lateral faces extending in a zigzag manner, characterised in that for holding the filter cartridge in the filter housing (5) there is provided a fixing frame (9) which engages with the border of the filter cartridge (8), presses the border strips (2) with a respective projecting pure air-side end face into a seal (6, 7) of the filter housing (5) and has, on two opposing sides, a flat tine (11) engaging in the outermost zigzag-shaped fold of the filter medium (1) and pressing it into a further seal in the filter housing (5).

2. Method of producing a filter cartridge having a filter medium folded in a zigzag manner and extending in a plane and two border strips for holding the filter medium, in which the filter medium is inserted into a receiving comb for application of each border strip in such a way that it projects slightly on the respective side of the receiving comb with its lateral face extending in a zigzag manner, for a filter according to claim 1, characterised in that a thin-walled border strip which is separate from the other border strip is stuck to the projecting zigzag-shaped lateral face by means of an edge-pasting machine.

3. Process according to claim 2, characterised in that a receiving comb is used which is slightly narrower than the filter medium so the filter medium projects slightly on both sides in the receiving comb.

4. Method according to claims 2 and 3, characterised in that a second receiving comb is inserted into the receiving comb after insertion of the filter medium.

5. Filter cartridge for a filter according to claim 1, which has a filter medium folded in a zigzag manner and extending in a plane and border strips for holding the filter medium and in which the border strips (2, 2a) are stuck against the two lateral faces extending in a zigzag manner, characterised in that the border strips (2, 2a) project slightly beyond the filter medium (1) extending in a zigzag manner on the pure air side of the filter medium (1).

## Revendications

1. Filtre comportant, disposée à l'intérieur d'un boîtier (5), une cassette filtrante (8) qui est munie d'une matière filtrante (1) pliée en zigzag et s'étendant en un seul plan sur les deux faces latérales de laquelle formant un zigzag ont été collées des bandes marginales (2) à parois minces, caractérisé en ce que pour maintenir la cassette filtrante à l'intérieur du boîtier (5) est prévu un cadre de serrage (9) s'agrippant sur le bord de ladite cassette (8), ce cadre comprime les bandes marginales (2), respectivement par une paroi frontale débordante placée du côté de l'air filtré, dans un joint (6, 7) du boîtier filtrant (5), ledit cadre (9) pénétrant respectivement dans le pli le plus extérieur du zigzag formé par la matière filtrante (11), et présentant une dent plate (11) qui force ce pli à entrer dans un autre joint du boîtier (5).

2. Procédé pour la fabrication d'une cassette filtrante présentant une matière filtrante pliée en forme de zigzag, s'étendant dans un plan et munie de deux bandes marginales pour le maintien de ladite matière filtrante, cette matière étant insérée dans un peigne, en vue d'y appliquer chacune des bandes marginales, de telle manière qu'elle déborde légèrement, sur le côté respectif dudit peigne, par sa face latérale s'étendant en forme de zigzag, afin d'obtenir un filtre conforme à la revendication 1, caractérisé en ce qu'au moyen d'une machine à coller les chants, on colle une bande marginale à paroi mince, séparée de l'autre bande marginale, contre la face latérale en forme de zigzag qui déborde du peigne.

3. Procédé selon la revendication 2, caractérisé en ce que l'on utilise un peigne qui est légèrement plus étroit que la matière filtrante, de telle sorte que cette matière filtrante déborde légèrement du peigne sur ses deux côtés.

4. Procédé selon les revendications 2 et 3, caractérisé en ce qu'après l'insertion de la matière filtrante dans le peigne, on y introduit un deuxième peigne.

5. Cassette filtrante pour un filtre conforme à la revendication 1, qui présente une matière filtrante pliée en zigzag s'étendant dans un plan, et des bandes marginales pour le maintien de ladite matière filtrante, et sur laquelle lesdites bandes marginales (2, 2a) sont collées contre les deux faces latérales s'étendant en forme de zigzag, caractérisée en ce que les bandes marginales (2, 2a) débordent légèrement de la matière filtrante (1) s'étendant en forme de zigzag sur le côté de l'air filtré de ladite matière filtrante (1).
